(19) Europäisches Patentamt
European Patent Office
Office européen des brevets

(11) EP 2 256 649 A1

(12) **EUROPEAN PATENT APPLICATION**

(43) Date of publication:
**01.12.2010 Bulletin 2010/48**

(51) Int Cl.:
***G06F 17/30*** *(2006.01)*

(21) Application number: **09462004.4**

(22) Date of filing: **29.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **BUDAPESTI MÜSZAKI ES GAZDASAGTUDOMANYI EGYETEM**
**H-1111 Budapest (HU)**

(72) Inventor: **Juhász, Sándor**
**8000 Székesfehérvár (HU)**

(74) Representative: **Harangozo, Gabor**
**Danubia**
**Patent & Law Office LLC**
**P.O. Box 198**
**1368 Budapest (HU)**

Remarks:
Amended claims in accordance with Rule 137(2) EPC.

# (54) Method and computer program for statistical and data-mining processing of large data sets

(57) The method according to the present invention relates to the processing of large data files using statistical and data mining approaches. The method is characterized by that
- the input data file having a predefined structure is subdivided into blocks containing an equal number of records (S100),
- said blocks are consecutively processed thereby creating a local subresult for each block in the main memory that is built up of records having the same structure but different keys (S200),
- the records of the local subresult are sorted according to a predefined principle (S300),
- the current local subresult and the current global subresult created from all the previous local subresults are merged by iterating through the records of the local and global subresults once, and the new global subresult result is created on the storage device (S400), and finally
- the previous global subresult is deleted from the background storage (S500), and if there are any blocks left for processing, the method returns to step S200.

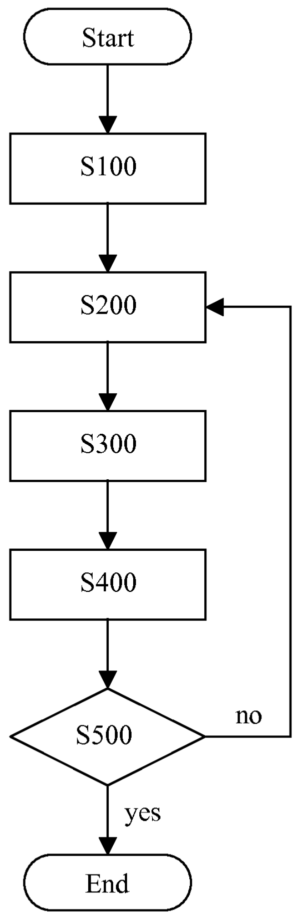


**Figure 3.a**

EP 2 256 649 A1

## Description

The invention relates to a method and a computer program for processing large data files using statistical and data mining approaches.

Enterprise transaction applications produce a gigantic amount of data by automatically recording transactions (telephone call records, data relating to utilization of public services, web logs) during their operation. These data need to be processed using statistical and data mining approaches. Even with today's high performance computers it is still a serious challenge to process and extract information from the data files including hundreds of millions or billions of records that frequently occur in the every day life of the enterprises. When automatically processing real life datasets, it must be taken into consideration that moving, cleaning, filtering, sorting and transforming large amounts of real data, the execution of the corresponding processing algorithms, and visualization of the results afterwards are tasks that significantly differ from the usual methods of the information systems.

When processing data on large scale, during the preparation and processing steps themselves that are actually executed on the large amount of data records, the computations to be performed are usually quite simple (e.g. summing, counting, averaging, etc.); the main problem here is the fact that these simple operations must be executed on many data records, which do not fit into the main memory at the same time. The main challenge is the efficient processing of data stored on the storage devices, such as hard disks, by using a limited amount of memory only.

When applying the so called brute force approach the data is processed with a simple straightforward algorithm as if an unlimited amount of memory was at one's disposal. This method is fast and efficient while the available memory is indeed sufficient, and furthermore, it provides a complete and exact result. However, if the input size reaches a limit where the available physical memory is not sufficient anymore, then the operating system is forced to emulate larger amount of memory than the physical memory capacity actually available. This is done by using the storage devices (swapping), which radically decreases the speed of processing; and finally the algorithms may run out of the addressable memory space (this is 4 GB in case of 32 bit system) causing the processing to stop anyway.

In order to solve the above problem, methods, like the sampling, data structure compression, partitioning, etc. are developed to process data not fitting into the main memory (out of core data processing).

The essence of sampling is that instead of processing all the data records, only a representative sample of the complete dataset is carefully chosen, which is small enough to be handled in the main memory without any problem. The result is given based on the selected sample only. This method is very fast and is applicable for processing data sets of arbitrary size. Its main disadvantages are the possible difficulty of selecting the sample and the fact that this method gives only an approximate result.

When compressing data structures, the original data or the results derived from it are transformed in a way that they occupy a smaller memory space than the original data themselves. This is achieved by re-coding the source, applying compression methods, and using special compact (e.g. tree-like) structures. This method provides a complete and exact result as well, but it is only efficient if the extent of compression is sufficient for storing the data to be processed in the memory.

The concept of data partitioning suggests the distribution of the original data into small parts (partitions) that are small enough to fit into the main memory, processing them one by one, and then unifying the partial results (subresults) obtained this way in a separate step afterwards. Additionally to providing a complete and exact result this method is easy to parallelize and is applicable to datasets of arbitrary size. One disadvantage of this approach is that selecting the size and contents of the partitions is not trivial, but at the same time it has a great effect on the performance. Another disadvantage of the partitioning is the late production of the final result as it is only obtained after merging the partial results obtained from all the partitions, and additionally these partial results should also be stored up to the moment the complete processing comes to its end.

The object of the present invention is to provide a novel partitioning-based data processing method that allows:

- to produce a global subresult (relating to the complete task) that provides a continuously ameliorating approximation after the processing of each partition,
- to reduce the amount of storage capacity necessary for storing the partial results,
- to set (limit) the amount of memory that is at the disposal of the algorithm,
- automatic adaptation of the size of partitions to the preset (memory) resource limit in a way to provide the highest efficiency possible,
- for the number of all processing steps and the number of storage accesses to have a nearly linear complexity even if there is a relationship between the processed data.

The invention is based on the recognition that although not all data processing tasks can be solved with an algorithm of linear complexity, it is a more frequent problem to find an efficient method for linearization. The invention provides a novel method for transforming (limiting) the complexity of the computations and the disk accesses of arbitrary data processing algorithms to quadratic complexity, provided that certain simple prerequisites are met, in a way that the factor or the quadratic member has a negligible significance. (This means that the processing time becomes linearly proportional to number of input records.)

The above object is reached by providing the methods according to claims 1 and 5, and by providing the computer program according to claim 8.

The invention is further detailed using the following figures:

- Figure 1 represents the input data structure applied in the method of the invention;
- Figure 2 represents the overview of the merging operation applied in the first method of the invention;
- Figure 3.a illustrates the flowchart of the steps of the first method of the invention;
- Figure 3.b is a flowchart showing the steps of merging the local and global subresults in detail according to a preferred embodiment of the first method of the invention; and
- Figure 4 demonstrates a possible application of the first method of the invention.

When applying the methods of the invention, we assume that the input file strictly follows the predefined structure shown in Figure 1, which means that it is the sequence of records having exactly the same structure. The records are of equal lengths, and the order and the size of their fields is fixed as well. Although the input file is logically a single sequence of the records, it is not required that all records share the same physical file on the computer, that is, the input file considered as a single logical unit may be represented by a sequence of physical files on a computer.

Figure 2 schematically represents the structure of the data processing mechanism applied in the first method of the invention. The input file is divided into partitions, called blocks hereafter, including an equal number of records. These blocks are processed one by one in a way, that by processing each block, a local subresult is produced, which is merged, right after having been created, with the global subresult produced so far. As a consequence, after processing each block, a new global subresult is created as well. The merged global subresult produced after processing the last block represents the final global result obtained from the whole input file.

In the local and global subresults, the information of the input records that were used for producing those results are aggregated and stored (extraction, aggregation). For practical reasons, each subresult item preferably contains a key element (e.g. user, topic, product identifier), which serves as a basis for the extraction of information and the recovery of knowledge. The subresults include a data structure for each key representing the summarized (aggregated) information for each given key. The local subresults are always produced in the main memory based on the records moved into the main memory... The merging operation is executed on the local subresult just produced and the last global subresult stored on the background storage. The result of merging is a new iteration of the global subresult which is created directly on the storage device.

To summarize the above facts we can conclude that the uniqueness of the novel method is that the merging of the subresults is not done after processing all of the blocks (i.e. after producing all of the subresults), but a global subresult is created based on all the data processed so far after processing each block. The advantages of this method are:

- after each block a valid global subresult is produced that includes all data processed so far,
- it requires a minimal effort only to continuously merge new periodically (e.g. daily or weekly) produced data to the result already obtained,
- there is no need for storing local subresults on the storage device allowing to reduce execution time and necessary temporary storage space,
- the memory and resource requirements of merging are independent of the number of the partitions.

In the following section, the steps of the first method of the invention are detailed. The steps of the first method of the invention are represented in the flowchart shown in Figure 3.

First in step S100 the length of blocks is fixed, then the input file containing n records is divided into m blocks each including an equal number of consecutive records of the original input file, where the records possess the before mentioned fixed structure. After the division, s=[$n/m$] pieces of blocks are created. (In the followings the size of the input file is considered to be an integer multiple of s, that is, $n=m*s$.) In step S100, only the size of the blocks is selected, no real processing is done. During the first approach, the size of the blocks should be selected in a way that the data, necessary for processing one block, should fit into the main physical memory, as this way the number of storage accesses due to virtual memory paging can be minimized. (The relaxation of the above limitation and the automatic selection of block sizes is subject of procedure 2 of the invention.)

In the next step S200, the processing of all m records of the next block (or the first block at the beginning) is completed producing the corresponding local subresult in the main memory. The processing is completed with a time complexity of O(f(m)) where f is a cost function characterizing the complexity of the processing of the records. By processing all records belonging to a block, a so called local subresult is produced which contains the useful information extracted from that given block in a predefined format. The local subresult is always stored in the main memory.

During step S300, the local subresult in the memory produced in the previous step S200 is transformed into a format (by sorting) that allows merging it to the global subresult produced from the local subresults of the previous blocks in linear time. To allow this, the records of the current local subresult are ordered (sorted) according to a parameter, e.g. according to their key. An alternative choice is to previously store the results in a hash table in S200.

In step 400, the actual (sorted) local subresult stored in the memory is merged to the sorted global subresult located on the storage device. The new global subresult obtained this way is produced directly on the storage device.

When processing the first block of the input file, it is obvious that no global subresult exists yet which the merging could be done to, thus the local subresult of the first block is written out directly to the storage device without any change (but already in the sorted format of step S300), and is considered to be the first global subresult.

An important property of step S400 is that the global subresult file is read sequentially, and only once, since both the local subresult in the memory and the global subresult on the storage device are sorted, thus merging can be completed in a time proportional to the number of participating records. It is important to note that neither the new global subresult nor the previous one necessary to produce the new iteration are ever located in the main memory, but are always found on the storage device, and their reading and writing is done record by record from the point of view of the algorithm (naturally a real implementation realizes the communication with the storage device through a buffer or a cache that can contain multiple records).

In step S500, it is checked whether all the blocks have already been processed, and if so then the complete processing procedure has been completed (the last global subresult is considered to be the final result). In the contrary case, the method returns to step S200 and continues the processing with the next block.

In a preferred embodiment of the first method of the invention, the next iteration of the global subresult is produced based on the current local subresult and the previous global subresult as detailed bellow (merging step). The variables i and *j* are indexing the items of the local subresult and the global subresult sorted according to their keys, respectively. Both indices start from 1 at the beginning of the data structures (i = j = 1). The key of record i of the local subresult is denoted by $k_i$, while the key of record *j* of the global subresult is denoted by $g_j$.

a. Step S402: It is checked whether there are any unprocessed records left in the global subresult (whether index *j* reached the last records of the global subresult). If there are no unprocessed records left on the input then the process continues at step S420. If still there are some records left, the method proceeds to step S403.

b. Step S403: The next record *j* of the particular global subresult is read from the ***input** file* of the storage device.

c. Step S404: It is checked whether the current record *j* of the global subresult is related to the current record i of the local subresult (i.e. whether they share the same key). As the local and the global subresults are sorted according to the same principle, it is sufficient to test this only one record i of the local subresult. If a relation between record *j* of the global subresult and record i of the local subresult is detected in step S404, (both records possess the same key; $k_i = g_j$) then the method continues at step S406; otherwise returns to step S410.

d. Step S406: If record *j* of the global subresult and record i of the local subresult are related (i.e. they share the same key; $k_i = g_j$) then in step S406, a new output record is created based on record *j* of the global subresult and record i of the local subresult (aggregation of information content), and this new output record is written to the storage device to the end of the *output file.*

e. Step S408: An advance in both lists belonging to the local and global results by stepping to the next records (i+1) and (j+1), respectively, is performed by incrementing both i and *j* by one ($i = i+1$, $j = j+1$). These new index values are used in the next iteration. The execution of the method continues at step S402.

f. Step S410: Since record *j* of the global subresult and record i of the local subresult are not related, the one with the smaller key value is written firstly to the output to keep the output sorted.

g. Step S411: If $k_i < g_j$ then step S412 is executed, otherwise, or if the local subresult set does not contain any more records, step S414 will be executed.

h. Step S412: Record i of the local subresult is written to the storage device to the end of the *output file.*

i. Step S413: Advancing to record ($i+1$) of the local subresult. In the next iteration we still use the current record *j* of the global subresult (index *j* does not change). The execution of the method continues at step S402.

j. Step S414: Record *j* of the global subresult is written to the end of the *output file* being built as a new global subresult on the storage device.

k. Step S415: Advancing to record ($j+1$) of the global subresult. In the next iteration we still use the current record i of the local subresult (index i does not change). The execution of the method continues at step S402.

l. Step S420: It is checked if any unprocessed records exist in the local subresult list, if there is none, the method continues at step S424.

m. Step S422: If there are still unprocessed records in the local subresult, those are processed iteratively and written to the end of the *output file* being built as a new global subresult on the storage device.

n. Step S424: The previous global subresult file is deleted from the storage device. The step of merging (S400) is completed for the current block.

The following code is an example for a computer program implementing the first method of the invention. For the sake of simplicity the program is described by a pseudo code. The meaning of the parameters used in the program is summarized in Table 1.

```
FOR k IN 1..s LOOP                              there are s blocks
 RLk = Process(Bk)                              processing block i, local partial result stored in PLk
 RLk = Sort(RLk)                                ordering of local partial result stored in RLk
 IF I = 1 THEN
   Write(RG1,RLi)                               The first global result is the first local result itself
 ELSE                                           In other cases merging of RGk-1 and is RLk is required
   i = j = 1                                    Init index variables
   WHILE j <= |RGk-1| LOOP                      This is the iteration loop for merging:
     reci := RLk[i]                               Let us call record i of the local result reci
     recj := read(RGk-1,j)                        The next record of the previous global result is recj
     IF reci = NULL THEN                          Is the last record in local result reached?
       write(RGk, recj)                           If yes, just write the global partial result record
     ELSE                                         If no:
       CASE reci.key = recj.key:
         recij := merge(reci, rec j)                1.Merge the corresponding records
         Write(RGk, recij)                            And write the result to the output file
         i = i + 1                                    Step on the next local result record
         j = j + 1                                    Step on the next global result record
         BREAK;
       CASE reci.key < recj.key:
         Write(RGk, reci)                           2. write the local result record having the
         i = i + 1                                     smaller key to the output file, and step on
         BREAK;                                         the next record
       CASE reci.key > recj.key:
         write(RGk, recj)                           3. write the global result record having the
         j = j + 1                                     smaller key to the output file, and step on
         BREAK;                                        the next record
     ENDIF
   ENDLOOP                                        Process all records of the previous global result
   WHILE i <= |RLk| LOOP
     Write(RGk, RLk[i])                           Write remaining local result record if any is left
     i = i + 1
   ENDLOOP
 ENDIF
ENDLOOP                                         Repeat until all blocks are processed
```

Table 1. Notations and their meaning used in the computer program implementing the first method of the invention

| Notation | Meaning |
|---|---|
| $B_k$ | block *k* |
| $R_{Lk}$ | local subresult generated form block *k* |
| $R_{Gk}$ | global subresult generated after processing block *k* |
| $R_{Lk}[i]$ | record *i* of local subresult generated form block *k* |
| $R_{Gk}[j]$ | record *j* of global subresult generated after processing block *k* |
| $\|R_{Gk}\|$ | size of the global subresult after iteration *k* |

The storage device access complexity of the data processing algorithm of the invention is detailed below, supposing that a result of size $\alpha x$ byte ($\alpha \ll 1$) is created from an input of size x byte. The storage access cost of processing block *j* measured in records (reading the input file, reading the global subresult, writing the global subresult):

$$k_j = m + m(j-1)\alpha + mj\alpha = m\left(1 + \alpha(2j-1)\right)$$

The background storage access cost of the complete algorithm (using the formula n/m=s):

$$k_{background_storage} = \sum_{j=1}^{s} k_j = \sum_{j=1}^{s} m\left(1 + \alpha(2j-1)\right) = ms + m\alpha \sum_{j=1}^{s} \left(2j-1\right) =$$

$$= ms + m\alpha s^2 = n + n^2 \frac{\alpha}{m} \approx O(n)$$

The above formula shows that the cardinality of the storage device accesses is basically quadratic, and it can be considered nearly linear in the only case when factor $\alpha$ is small enough (that is, a small enough extract of the input is being produced), or when the largest possible block size (m) is used.

While the number of storage device accesses can be reduced to nearly linear complexity, it is important to note that the methods of the invention fully linearize the complexity of the processing algorithm (without considering the merging), since the processing times f(m) of the blocks of size m are equal, thus the processing time of the complete input file can be calculated as follows:

$$k_{proc} = \sum_{j=1}^{s} f(m) = sf(m) = \frac{n}{m} f(m) = n\frac{f(m)}{m} = O(n)$$

Naturally, the linearization includes the processing time of the blocks only; the total complexity of the merging process can be considerably greater than that. If the merging complexity derived from the original task itself is negligible then the complexity of the merging becomes quadratic as well (as the number of necessary comparisons can be calculated similarly to the number of background storage accesses shown above). The significance of the quadratic factor can be reduced by decreasing $\alpha$ or by increasing m.

As mentioned before, the necessary condition for the merging step described in S400 to be simple and linear is to have the available subresults in a sorted form. This condition can be automatically fulfilled by storing the local and global subresults in a structure that provides sorting of the elements according to an internal principle.

Accordingly in a preferred embodiment of the first method of the invention, the result records are placed into a hash table using their keys in step S200 that processes the blocks, which implicitly executes the sorting of local results scheduled to step S300. Hash table is able to support the quick, O(*1*) time completion of searching and aggregation-like operations (counting, summing), and furthermore its use automatically provides an ordering for the records. These features result in increased efficiency of the method.

The efficiency of the first method of the invention can be further enhanced by automatically applying an optimal choice of the block sizes. This is feasible by continuously unifying the processing of multiple blocks until there is sufficient amount of memory at disposal. In this case the merging operation with high storage device operation demand is executed less frequently, which means, that essentially the smaller blocks are unified into larger partitions in an adaptive way in order to reduce the complexity of the background storage accesses (reduction of parameter m mentioned at the complexity calculations).

The present invention also relates to a data processing method based on merging of the local and global subresults, which method skips the estimation of the largest possible block size that is still processable in the main memory. In step S100b of this method, the block size is intentionally chosen to be significantly smaller, allowing multiple (up to 10-50) blocks to be processed in the main memory. Like in the previous cases, the blocks here are built up from equal number of records as well having a predefined structure. Afterwards in step S200b, several blocks are processed without merging the results. We keep on processing the blocks while there is sufficient available space left in the main memory (or a predefined memory limit is reached). After processing each block, a local subresult with identical structure is generated for each in the main memory. The local subresults are sorted in an adequate manner in step S300b (e.g. according to their key). In a preferred embodiment of the second method of the invention, the processing step S200b stores the generated local subresults in a hash table based on the key of the records, and this way step S200b executes step S300b as well. The merging of the local subresults in the main memory to each other and to the global subresult found on the storage device is completed in a single step in step S400b. Finally, in step S500b, it is checked whether all the blocks have already been processed, and if so, then the complete processing method is completed (the last global subresult is considered to be the final result). Otherwise the method returns back to step S200b, and continues the processing with the next group of blocks.

The second method of the invention introduced above has the advantage of being much less sensitive to the right choice of block size and furthermore it provides a much better control over the amount of memory dedicated to the processing (it is a free parameter). By making continuous use of all the available memory, the performance of this adaptive method approximates well the performance of the brute force method, while it does not place any restrictions on the size of the processable data.

At the same time, it is a limitation to the applicability that the checkpoints allowing the restart of processing in case of errors are less frequent, and furthermore is it evident, that a valid complete final result cannot be obtained after processing each block, but it is available after processing and merging full groups of blocks only.

The application of the methods according to the invention is beneficial in cases where the storage space requirement of storing the global subresult is much less than that of the records used for producing it. This requirement is usually automatically fulfilled, as the basic goal of processing large data files with statistical and data mining approaches is exactly to extract a manageable amount of informative summarized and derived data from the large input set of otherwise unmanageable size.

The present invention further relates to a computer program that executes the steps of the above introduced methods. The computer program according to the invention can be implemented - even in a distributed way - on any computer or any device equipped with microprocessor, including networks using any kind of communication protocols built up of those. The storage device used in the methods of the invention can be a single hard disk with high capacity, but can be centralized or distributed system of storage devices as well. In this later case it is practical to assure the synchronized execution of the merging steps.

The description below introduces the process of the first method of the invention though a specific example illustrated in Figure 4. The task to be completed in this specific example is the following: a log file records different activities of users. The records contain a timestamp (e.g. indicating days of the week), an identifier of the user, the type of the activity, and some other data. There are three types of activities distinguished in the example: R, G and B. From the input dataset having the structure described above, the information that specifies how many different types of activities were carried out by each specific user during the year should be extracted.

As it is visible in Figure 4, the local subresult produced from the first block is automatically considered to be the first global subresult. The actual local and global subresults created by processing the following blocks (partitions) are merged according to the aforementioned procedures to create the next iteration of the global subresult. The records in the local and global subresults are sorted in ascending order according to the identifier of the users.

Although only some steps of the full data processing were presented in Figure 4 for the sake of clarity, it is evident that the size of the local and global subresults containing the useful aggregated information extracted from the large input file is significantly - even by multiple orders of magnitude - smaller than the size of the input file. The specific example in Figure 4 clearly shows that any global subresult includes the complete result set of the preceding data processing, thus there is no need for restarting the complete processing task in case of unexpected errors, but the processing can continue from the beginning of the last interrupted block (partition).

The data set of the specific example can be adapted to different practical domains:

- it can be a log file describing the daily work of customer service clerks, wherein the letters R, G and B mean different categories of task, e.g. answer of a routine question, autonomous servicing of complex customer needs, servicing of complex customer needs that required external help. The result will give an overview of the work load of the employees at the customer service as well as about the weekly distribution profile of the types of activities.
- it can be a web usage monitoring log, wherein the different colours hint on user clicks on different topics like politics, weather or sport.
- it can be a log storing the sale records of a hypermarket, wherein the different colours hint on categories of products like food, clothes, electrical goods The result here will give an overview of value and distribution of the purchases in different categories of goods among the customers and the days of the week.

## Claims

**1.** A method for processing large data files using statistical and data mining approaches, **characterized by** that

- the input data file having a predefined structure is subdivided into blocks containing an equal number of records (S100),
- said blocks are consecutively processed thereby creating a local subresult for each block in the main memory that is built up of records having the same structure but different keys (S200),
- the records of the local subresult are sorted according to a predefined principle (S300),
- the current local subresult and the current global subresult created from all the previous local subresults are merged by iterating through the records of the local and global subresults once, and the new global subresult result is created on the storage device (S400), and finally
- the previous global subresult is deleted from the background storage (S500), and if there are any blocks left for processing, the method returns to step S200.

**2.** The method according to claim 1 **characterized by** executing the following steps when merging the local and global subresults:

a. Step S402: It is checked whether there are any unprocessed records left in the global subresult. If there are no unprocessed records left on the input then the process continues at step S420. If still there are some records left, the method proceeds to step S403.
b. Step S403: The next record *j* of the particular global subresult is read from the input file of the storage device.
c. Step S404: It is checked whether the current record *j* of the global subresult is related to the current record i of the local subresult (i.e. whether they share the same key). As the local and the global subresults are sorted according to the same principle, it is sufficient to test this only one record i of the local subresult. If a relation between record *j* of the global subresult and record i of the local subresult is detected in step S404, (both records possess the same key; $k_i = g_j$) then the method continues at step S406; otherwise returns to step S410.
d. Step S406: If record *j* of the global subresult and record i of the local subresult are related (i.e. they share the same key; $k_i = g_j$) then in step S406, a new output record is created based on record *j* of the global subresult and record i of the local subresult (aggregation of information content), and this new output record is written to the storage device to the end of the output file.
e. Step S408: An advance in both lists belonging to the local and global results by stepping to the next records (i+1) and (j+1), respectively, is performed by incrementing both i and *j* by one ($i = i+1$, $j = j+1$). These new index values are used in the next iteration. The execution of the method continues at step S402.
f. Step S410: Since record *j* of the global subresult and record i of the local subresult are not related, the one with the smaller key value is written firstly to the output to keep the output sorted.
g. Step S411: If $k_i < g_j$ then step S412 is executed, otherwise, or if the local subresult set does not contain any more records, step S414 will be executed.
h. Step S412: Record i of the local subresult is written to the storage device to the end of the output file.
i. Step S413: Advancing to record (*i+1*) of the local subresult. In the next iteration we still use the current record j of the global subresult (index j does not change). The execution of the method continues at step S402.
j. Step S414: Record *j* of the global subresult is written to the end of the output file being built as a new global subresult on the storage device.
k. Step S415: Advancing to record (*j+1*) of the global subresult. In the next iteration we still use the current record i of the local subresult (index i does not change). The execution of the method continues at step S402.
l. Step S420: It is checked if any unprocessed records exist in the local subresult list, if there is none, the method continues at step S424.
m. Step S422: If there are still unprocessed records in the local subresult, those are processed iteratively and written to the end of the output file being built as a new global subresult on the storage device.
n. Step S424: The previous global subresult file is deleted from the storage device. The step of merging (S400) is completed for the current block.

**3.** The method according to claim 1 or 2, **characterized by** sorting the local and global subresults according to the key parameter.

**4.** The method according to claim 1 or 2, **characterized by** storing the local and global subresults in hash tables in the main memory, and by using the ordering according to the physical keys provided by the hash tables themselves when merging or when storing on the storage device.

**5.** A method for processing large data files using statistical and data mining approaches, **characterized by** that:

- the input data file of predefined structure is subdivided into blocks containing the same number of records in a way that the size of the blocks is significantly smaller than the maximum size processable in the main memory, which allows more - preferably 10-50 - blocks to be processed together in the main memory (100b);
- said multiple blocks are processed sequentially in the main memory while there is sufficient memory available for further processing or the preset memory limit is not reached, and when processing the blocks, a local subresult is created in the memory for each of said blocks (S200b);
- the records of the local subresult are sorted according to a predefined principle (S300b);
- the local subresults in the main memory are merged with each other and with the global subresult stored on the storage device in a single step (S400b);
- it is checked whether all blocks have already been processed, and if so, then the method is completed, and the last global subresult is considered to be the final result, otherwise the method returns back to step S200b and continues by processing the next group of blocks (S500b).

**6.** The method according to claim 5 **characterized by** sorting the local and global subresults according to the key parameter.

**7.** The method according to claim 5 **characterized by** storing the local and global subresults in hash tables in the main memory, and using the ordering according to the physical keys provided by the hash tables themselves when merging or when storing on storage device.

**8.** Computer program for processing large data files **characterized by** containing instructions which, when being executed on a computer or other device having a microprocessor, or on a group thereof connected by a network, carry out the method according to any one of claims 1 to 7.

**Amended claims in accordance with Rule 137(2) EPC.**

**1.** A method for processing large data files using statistical and data mining approaches, **characterized by** that

- the input data file having a predefined structure is subdivided into blocks containing an equal number of records (S100),
- said blocks are consecutively processed thereby creating a local subresult for each block in the main memory that is built up of records having the same structure but different keys (S200),
- the records of the local subresult are sorted according to a predefined principle (S300),
- the current local subresult and the current global subresult created from all the previous local subresults are merged by iterating through the records of the local and global subresults once, and the new global subresult result is created on the storage device (S400), and finally
- the previous global subresult is deleted from the background storage (S500), and if there are any blocks left for processing, the method returns to step S200.

**2.** The method according to claim 1 **characterized by** executing the following steps when merging the local and global subresults:

a. Step S402: It is checked whether there are any unprocessed records left in the global subresult. If there are no unprocessed records left on the input then the process continues at step S420. If still there are some records left, the method proceeds to step S403.
b. Step S403: The next record *j* of the particular global subresult is read from the input file of the storage device.
c. Step S404: It is checked whether the current record *j* of the global subresult is related to the current record *i* of the local subresult (i.e. whether they share the same key). As the local and the global subresults are sorted according to the same principle, it is sufficient to test this only one record *i* of the local subresult. If a relation between record *j* of the global subresult and record *i* of the local subresult is detected in step S404, (both records possess the same key; $k_i = g_j$) then the method continues at step S406; otherwise returns to step S410.
d. Step S406: If record *j* of the global subresult and record *i* of the local subresult are related (i.e. they share the same key; $k_i = g_j$) then in step S406, a new output record is created based on record *j* of the global subresult and record *i* of the local subresult (aggregation of information content), and this new output record is written to the storage device to the end of the output file.
e. Step S408: An advance in both lists belonging to the local and global results by stepping to the next records (i+1) and (j+1), respectively, is performed by incrementing both *i* and *j* by one ($i = i+1$, $j = j+1$). These new index values are used in the next iteration. The execution of the method continues at step S402.

f. Step S410: Since record *j* of the global subresult and record *i* of the local subresult are not related, the one with the smaller key value is written firstly to the output to keep the output sorted.

g. Step S411: If $k_i < g_j$ then step S412 is executed, otherwise, or if the local subresult set does not contain any more records, step S414 will be executed.

h. Step S412: Record *i* of the local subresult is written to the storage device to the end of the output file.

i. Step S413: Advancing to record (*i*+1) of the local subresult. In the next iteration we still use the current record *j* of the global subresult (index *j* does not change). The execution of the method continues at step S402.

j. Step S414: Record *j* of the global subresult is written to the end of the output file being built as a new global subresult on the storage device.

k. Step S415: Advancing to record (*j*+1) of the global subresult. In the next iteration we still use the current record *i* of the local subresult (index i does not change). The execution of the method continues at step S402.

l. Step S420: It is checked if any unprocessed records exist in the local subresult list, if there is none, the method continues at step S424.

m. Step S422: If there are still unprocessed records in the local subresult, those are processed iteratively and written to the end of the output file being built as a new global subresult on the storage device.

n. Step S424: The previous global subresult file is deleted from the storage device. The step of merging (S400) is completed for the current block.

**3.** The method according to claim 1 or 2, **characterized by** sorting the local and global subresults according to the key parameter.

**4.** The method according to claim 1 or 2, **characterized by** storing the local and global subresults in hash tables in the main memory, and by using the ordering according to the physical keys provided by the hash tables themselves when merging or when storing on the storage device.

**5.** A method for processing large data files using statistical and data mining approaches, **characterized by** that:

- the input data file of predefined structure is subdivided into blocks containing the same number of records in a way that the size of the blocks is significantly smaller than the maximum size processable in the main memory, which allows more - preferably 10-50 - blocks to be processed together in the main memory (100b);
- said multiple blocks are processed sequentially in the main memory while there is sufficient memory available for further processing or the preset memory limit is not reached, and when processing the blocks, a local subresult is created in the memory for each of said blocks (S200b);
- the records of the local subresult are sorted according to a predefined principle (S300b);
- the local subresults in the main memory are merged with each other and with the global subresult stored on the storage device in a single step (S400b);
- it is checked whether all blocks have already been processed, and if so, then the method is completed, and the last global subresult is considered to be the final result, otherwise the method returns back to step S200b and continues by processing the next group of blocks (S500b).

**6.** The method according to claim 5 **characterized by** sorting the local and global subresults according to the key parameter.

**7.** The method according to claim 5 **characterized by** storing the local and global subresults in hash tables in the main memory, and using the ordering according to the physical keys provided by the hash tables themselves when merging or when storing on storage device.

**8.** Computer program for processing large data files **characterized by** containing instructions which, when being executed on a computer or other device having a microprocessor, or on a group thereof connected by a network, carry out the method according to any one of claims 1 to 7.

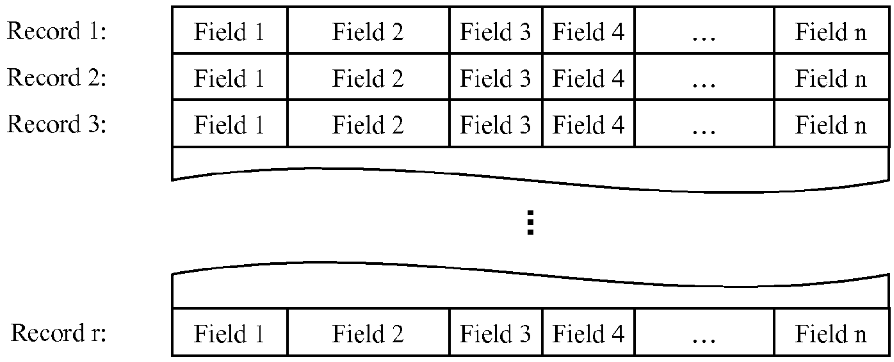


**Figure 1.**

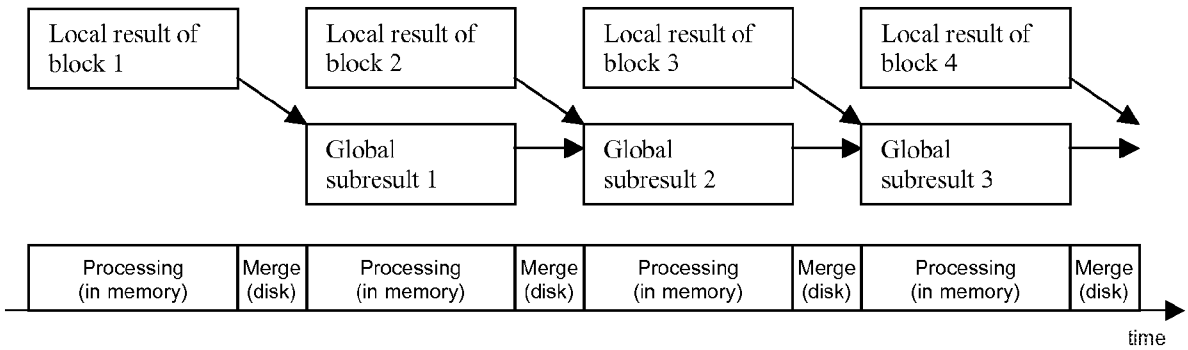


**Figure 2.**

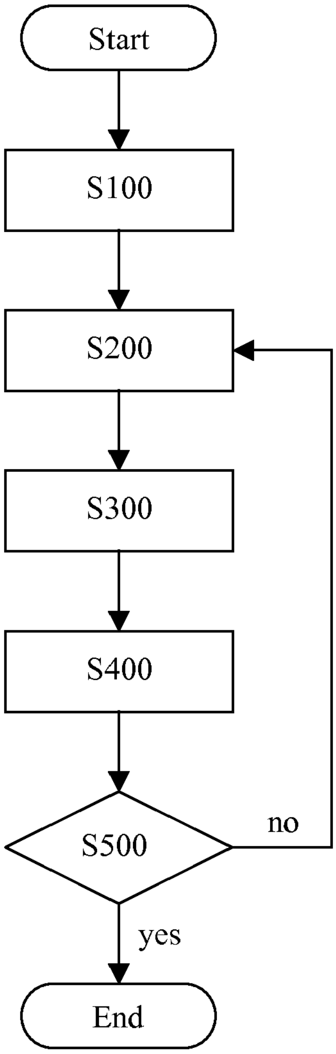


**Figure 3.a**

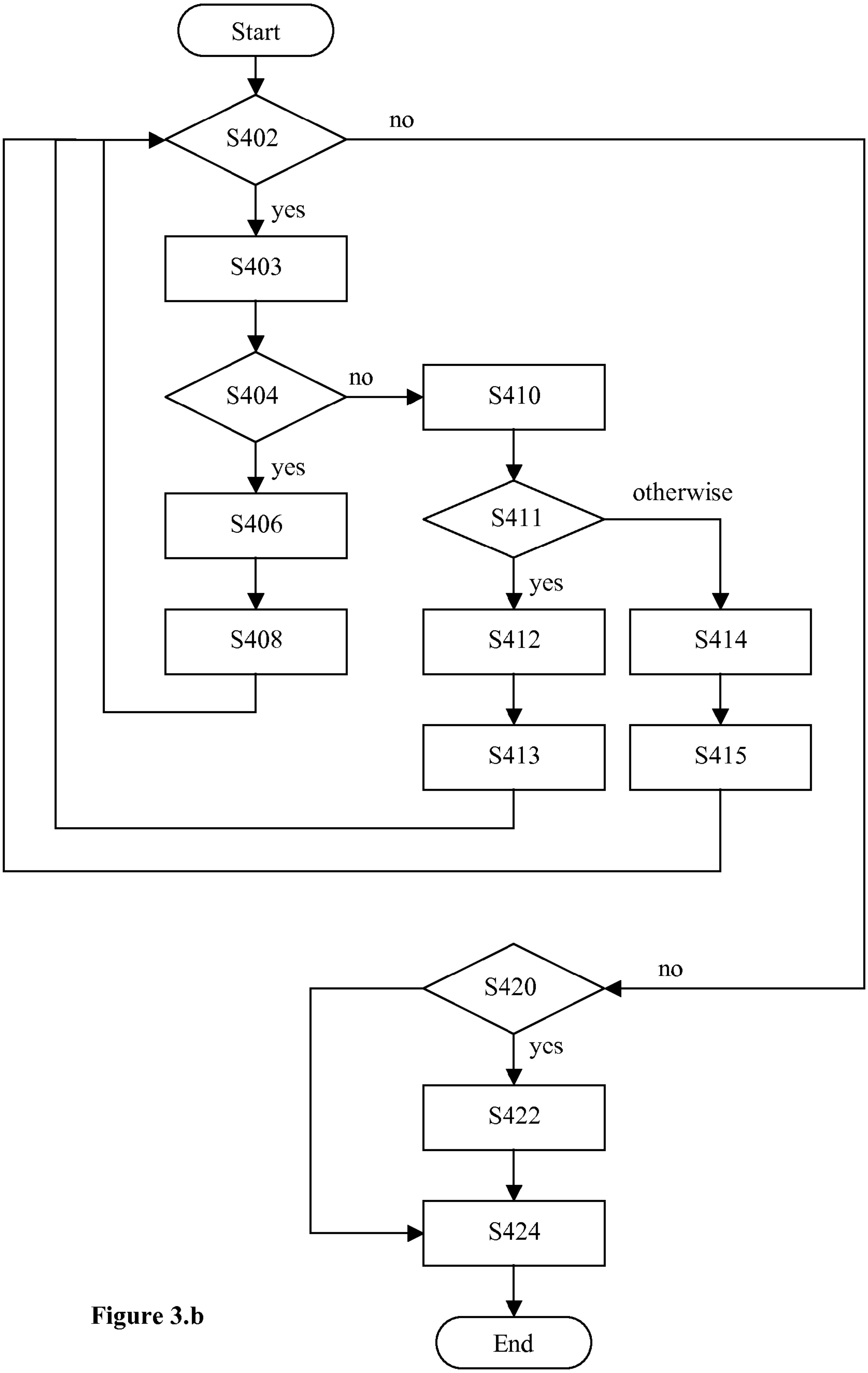
Start
S402
no
yes
S403
S404
no
S410
yes
S406
S411
otherwise
yes
S408
S412
S414
S413
S415
S420
no
yes
S422
S424
End

Figure 3.b

| Date | User ID | Type | Other fields *non-used* | | | |
|---|---|---|---|---|---|---|
| 01.01. (Th) | U1 | R | | | | Block 1 |
| 01.01. (Th) | U2 | B | | | | |
| 01.01. (Th) | U1 | R | | | | |
| 01.01. (Th) | U3 | G | | | | |
| 01.01. (Th) | U3 | G | | | | |
| 01.01. (Th) | U2 | R | | | | |
| 01.01. (Th) | U1 | G | | | | Block 2 |
| 01.02. (Fr) | U1 | B | | | | |
| 01.02. (Fr) | U5 | R | | | | |
| 01.02. (Fr) | U6 | R | | | | |
| 01.02. (Fr) | U2 | R | | | | |
| 01.02. (Fr) | U3 | R | | | | |
| 01.02. (Fr) | U1 | R | | | | Block 3 |
| 01.02. (Fr) | U4 | B | | | | |
| 01.02. (Fr) | U4 | B | | | | |
| 01.02. (Fr) | U1 | B | | | | |
| 01.02. (Fr) | U3 | G | | | | |
| 01.02. (Fr) | U4 | G | | | | |
| 01.03. (Sa) | U4 | R | | | | Block 4 |
| 01.03. (Sa) | U1 | R | | | | |
| 01.03. (Sa) | U6 | B | | | | |
| 01.03. (Sa) | U2 | G | | | | |
| 01.03. (Sa) | U4 | B | | | | |
| 01.03. (Sa) | U4 | B | | | | |
| | | ⋮ | | | | |

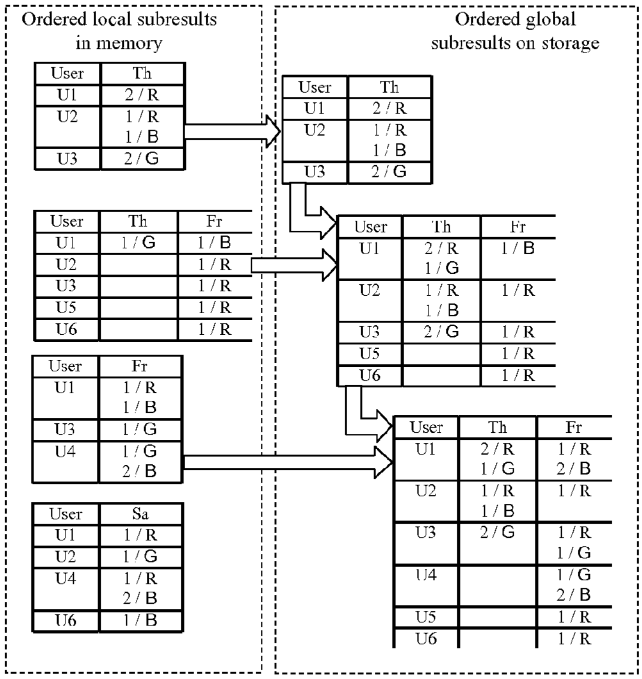


**Figure 4.**

Europäisches Patentamt
European Patent Office
Office européen des brevets

# EUROPEAN SEARCH REPORT

Application Number
EP 09 46 2004

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/120591 A1 (KELLER MARTIN [DE]) 29 August 2002 (2002-08-29)<br>* abstract *<br>* paragraphs [0018] - [0144]; figures 1-3 * | 1-8 | INV. G06F17/30 |
| A | MAYBINK MUYEBA ET AL: "Extending Attribute-Oriented Induction as a Key-Preserving Data Mining Method" PRINCIPLES OF DATA MINING AND KNOWLEDGE DISCOVERY; [LECTURE NOTES IN COMPUTER SCIENCE;LECTURE NOTES IN ARTIFICIAL INTELLIGENCE;LNCS], SPRINGER-VERLAG, BERLIN/HEIDELBERG,<br>vol. 1704, 8 June 2004 (2004-06-08), pages 448-455, XP019000398<br>ISBN: 978-3-540-66490-1<br>* the whole document * | 1-8 | |
| A | BAILEY S M ET AL: "Papyrus: A System for Data Mining over Local and Wide Area Clusters and Super-Clusters" SUPERCOMPUTING, ACM/IEEE 1999 CONFERENCE 13-18 NOV. 1999, PISCATAWAY, NJ, USA,IEEE, 13 November 1999 (1999-11-13), pages 63-63, XP010892841<br>ISBN: 978-1-58113-091-1<br>* the whole document * | 1-8 | TECHNICAL FIELDS SEARCHED (IPC)<br>G06F |

The present search report has been drawn up for all claims

3

| Place of search | Date of completion of the search | Examiner |
|---|---|---|
| Berlin | 30 October 2009 | Moon, Timothy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 09 46 2004

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2009

| Patent document cited in search report | Publication date | Patent family member(s) | Publication date |
|---|---|---|---|
| US 2002120591 A1 | 29-08-2002 | NONE | |

EPO FORM P0459

For more details about this annex : see Official Journal of the European Patent Office, No. 12/82